# EUROPÄISCHE PATENTANMELDUNG

(11) **EP 3 862 608 A1**
(43) Veröffentlichungstag der Anmeldung: **11.08.2021**
(21) Anmeldenummer: 21153554.7
(22) Anmeldetag: 26.01.2021
(51) Int. Cl.: F16L 33/207, F16L 57/02, F16L 33/30

(54) **SCHLAUCHNIPPEL UND VERWENDUNG EINES SCHLAUCHNIPPELS**

(30) Priorität: 05.02.2020 DE 202020100629 U
(71) Anmelder: Neoperl GmbH, 79379 Müllheim (DE)
(72) Erfinder: Reinhardt, Holger, 79232 March/Buchheim (DE)
(74) Vertreter: Mertzlufft-Paufler, Cornelius

(57) **Zusammenfassung**

Die Erfindung betrifft einen Schlauchnippel (1) mit einem Schlauchstutzen (2), wobei der Schlauchstutzen (2) außenseitig einen Crimpabschnitt (3) zur Befestigung einer Fluidleitung aufweist, wobei der Schlauchstutzen (2) in seinem Inneren wenigstens eine Verstärkung (4) aufweist, die die Wandung des Schlauchstutzens (2) stabilisiert. (Fig. 1)

## Beschreibung

Die Erfindung betrifft einen Schlauchnippel mit einem Schlauchstutzen, wobei der Schlauchstutzen außenseitig einen Crimpabschnitt aufweist.

Schlauchnippel, die auch als Fitting bezeichnet werden, sind Verbindungsteile, um einen Schlauch oder ein Rohr über ein freies Ende anschließen zu können. Schlauchnippel werden also insbesondere zur Herstellung von Schlauchleitungsverbindungen und/oder Rohrleitungsverbindungen verwendet.

Schlauchnippel eingangs genannter Art sind bereits bekannt und stellen die übliche Ausgestaltung der meisten vorbekannten Schlauchnippel dar. Es hat sich jedoch gezeigt, dass Schlauchstutzen vorbekannter Schlauchnippel häufig nicht ausreichend stabil und widerstandsfähig sind, so dass es zu Einschnürungen kommen kann, wodurch ein lichtes Öffnungsmaß reduziert wird. Ferner weisen vorbekannte Schlauchnippel den Nachteil auf, dass diese im Bereich des Schlauchstutzens brechen können. Gerade dann, wenn mit dem Schlauchnippel verbundene Leitungen bewegt werden, kommt es zu derart großen mechanischen Belastungen, dass es zu Beschädigungen am Schlauchnippel kommen kann.

Es besteht daher die Aufgabe, einen Schlauchnippel eingangs genannter Art mit verbesserten Gebrauchseigenschaften bereitzustellen.

Die Lösung dieser Aufgabe wird erfindungsgemäß durch einen Schlauchnippel mit den Merkmalen nach Anspruch 1 gelöst.

Insbesondere wird erfindungsgemäß zur Lösung der vorgenannten Aufgabe ein Schlauchnippel eingangs genannter Art vorgeschlagen, wobei der Schlauchstutzen in seinem Inneren im Bereich des Crimpabschnitts wenigstens eine Verstärkung aufweist. Somit ist eine Stabilisierung des Schlauchstutzens erreicht, so dass eine erhöhte Knicksteifigkeit und/oder verringerte Einschnürung (Verengung) eines Durchflusskanals erreicht ist.

Als Verstärkung im Sinne der Anmeldung kann eine Struktur verstanden werden, die auf eine Wandung des Schlauchstutzens aufgesetzt ist und/oder vorzugsweise bei monolithischer Ausbildung einer Wandung und/oder einer Ausbildung der Verstärkung durch eine Materialanhäufung und/oder eine lokal erhöhte Dicke der Wandung des Schlauchstutzens ausgebildet ist. Somit ist es möglich, die zuvor beschriebenen Einschnürungen, also insbesondere Verengungen des lichten Öffnungsquerschnitts, und Beschädigungen besser zu vermeiden.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer vorteilhaften Weiterbildung kann sich die Verstärkung längs wenigstens einer Hälfte des Crimpabschnitts erstrecken. Somit ist es möglich, eine besonders stabile Verstärkung auszubilden, ohne dass es zu großen Einschränkungen des lichten Öffnungsquerschnitts kommt.

Gemäß einer weiteren vorteilhaften Ausgestaltung kann es vorgesehen sein, dass sich die Verstärkung zumindest teilweise innenumfangseitig und/oder umlaufend erstreckt. Somit ist es möglich, den Platzbedarf gegenüber vorbekannten Schlauchnippeln annähernd gleich groß zu halten.

Als besonders vorteilhaft hat es sich erwiesen, wenn die Verstärkung von einer Grundform des Schlauchnippels nach innen abragend ausgebildet ist.

Um eine Verbesserung der Zugfestigkeit erreichen zu können, kann es vorgesehen sein, dass die Verstärkung einen lichten Querschnitt des Schlauchstutzens in wenigstens zwei, vorzugsweise wenigstens drei Teilquerschnitte unterteilt. Somit ist es möglich, eine bessere Ableitung der wirkenden Kräfte erreichen zu können.

Eine weitere vorteilhaften Ausgestaltung kann vorsehen, dass die Verstärkung an wenigstens zwei, vorzugsweise wenigstens drei, voneinander in Umfangsrichtung beabstandeten Stellen einer Grundform, insbesondere der bereits zuvor genannten Grundform, des Schlauchnippels angreift. Auch dadurch ist eine möglichst gute Kraftaufnahme und -ableitung möglich.

Gemäß einer besonders vorteilhaften Ausgestaltung kann es vorgesehen sein, dass die Verstärkung wenigstens zwei, vorzugsweise wenigstens drei, Rippen aufweist. Vorzugsweise können die Rippen an ihren abragenden Enden miteinander verbunden sein. Dadurch kann es zu einer Versteifung des Schlauchstutzens kommen, was insbesondere die Verwindungsteifigkeit erhöht.

Um eine möglichst kostengünstige Fertigung erreichen zu können, kann es vorgesehen sein, dass die Verstärkung spritzgussentformbar ausgebildet ist.

Alternativ oder ergänzend kann es ebenfalls vorgesehen sein, dass die Verstärkung über ihre Längserstreckung einen gleichbleibenden Querschnitt aufweist. Somit ist es möglich, eine besonders gute Kraftableitung bei wirkenden Torsionskräften erreichen zu können.

Um ein lichtes Öffnungsmaß des Schlauchstutzens möglichst gleichmäßig ausgestalten zu können, kann es vorgesehen sein, dass die Verstärkung über ihre Quererstreckung einen gleichbleibenden Querschnitt aufweist.

Um vorzugsweise mittels eines Verstärkungselements eine sowohl die Zugfestigkeit wie auch die Verbindungsteifigkeit verbessernde Verstärkung ausbilden zu können, kann es vorgesehen sein, dass die Verstärkung entlang ihrer Längserstreckung von einer Längsachse des Schlauchstutzens insbesondere aufgrund wenigstens einer Krümmung, abweicht.

Gemäß einer besonders bevorzugten Ausgestaltung kann die Verstärkung durch wenigstens eine Rippe mit gleichbleibender und/oder variierender Stärke ausgebildet sein. Somit ist eine optimale Anpassung an die jeweiligen Einsatzgebiete möglich.

Gemäß einer weiteren vorteilhaften Ausgestaltung kann es vorgesehen sein, dass die Verstärkung durch wenigstens eine Rippe ausgebildet ist, die von einer Innenwandung nach innen absteht, insbesondere senkrecht absteht.

Um Turbulenzen innerhalb des Durchflusskanals besser verhindern zu können, kann zur Reduzierung eines Strömungswiderstandes gemäß einer weiteren vorteilhaften Ausgestaltung vorgesehen sein, dass die Verstärkung am oberen Rand und/oder zuströmseitig eine Abrundung aufweist. Dadurch kann das Medium besser an den Rippen vorbeifließen, da insbesondere keine senkrecht zur Strömungsrichtung ausgerichtete Prallfläche und/oder scharfe Kanten vorliegt/vorliegen.

Gemäß einer weiteren bevorzugten Ausführungsvariante weist der Schlauchnippel mindestens einen Nennfluss von 16 Liter pro Minute bei 3 bar auf (nach DIN EN 13618).

Die Erfindung betrifft außerdem die Verwendung eines Schlauchnippels, wie er hierin beschrieben und beansprucht ist, zur Ausbildung einer Schlauchverbindung und/oder einer Rohrverbindung.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine Seitenansicht einer möglichen Ausführungsform eines erfindungsgemäßen Schlauchnippels,
- Fig. 2: ein Querschnitt durch den Schlauchstutzen des Schlauchnippels aus Fig. 1,
- Fig. 3: ein Längsschnitt durch den Schlauchstutzen des Schlauchnippels aus den Fig. 1 und 2,
- Fig. 4-9: weitere mögliche Querschnittsformen möglicher Ausgestaltungen eines erfindungsgemäßen Schlauchnippels,
- Fig. 10: eine Seitenansicht einer weiteren möglichen Ausführungsform eines erfindungsgemäßen Schlauchnippels,
- Fig. 11: ein Querschnitt durch den Schlauchstutzen des Schlauchnippels aus Fig. 10,
- Fig. 12: ein Längsschnitt durch den Schlauchstutzen des Schlauchnippels aus den Fig. 10 und 11,
- Fig. 13: eine Seitenansicht einer weiteren möglichen Ausführungsform eines erfindungsgemäßen Schlauchnippels,
- Fig. 14: ein Querschnitt durch den Schlauchstutzen des Schlauchnippels aus Fig. 13,
- Fig. 15: ein Längsschnitt durch den Schlauchstutzen des Schlauchnippels aus den Fig. 13 und 14,
- Fig. 16: eine Seitenansicht einer weiteren möglichen Ausführungsform eines erfindungsgemäßen Schlauchnippels,
- Fig. 17: ein Querschnitt durch den Schlauchstutzen des Schlauchnippels aus Fig. 16,
- Fig. 18: ein Längsschnitt durch den Schlauchstutzen des Schlauchnippels aus den Fig. 16 und 17,
- Fig. 19: eine Seitenansicht einer weiteren möglichen Ausführungsform eines erfindungsgemäßen Schlauchnippels,
- Fig. 20: ein Querschnitt durch den Schlauchstutzen des Schlauchnippels aus Fig. 19,
- Fig. 21: ein Längsschnitt durch den Schlauchstutzen des Schlauchnippels aus den Fig. 19 und 20.

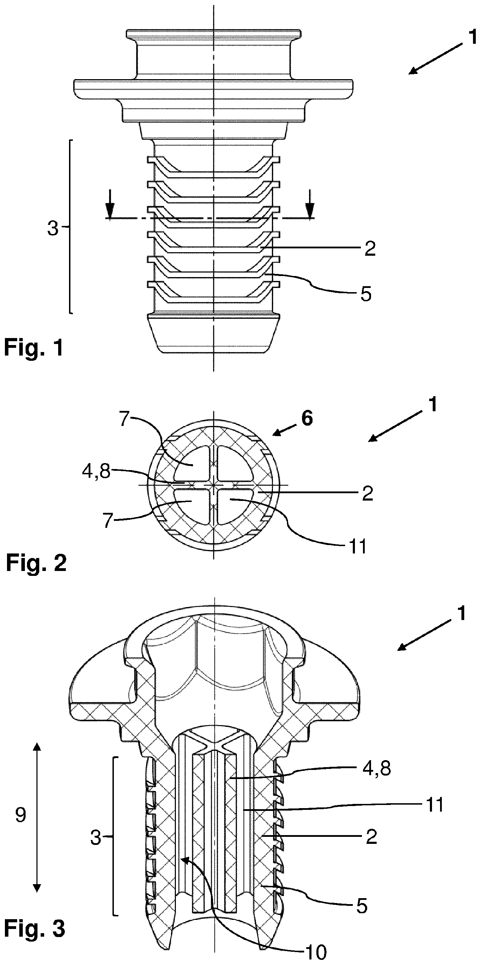

Die Figuren 1-21 zeigen eine Auswahl möglicher Ausführungsvarianten eines erfindungsgemäß ausgestalteten Schlauchnippels, der im Ganzen mit 1 bezeichnet ist. Diese Auswahl ist jedoch nicht als abschließend zu verstehen.

Der Schlauchnippel 1 dient dazu, um eine Leitungsverbindung, wie z.B. eine Schlauchleitungsverbindung und/oder eine Rohrleitungsverbindung auszubilden, indem ein freies Ende eines Schlauchs oder Rohres auf einen Schlauchstutzen 2 des Schlauchnippels 1 geschoben und daran befestigt wird. Die Befestigung erfolgt in der Regel durch Crimpen, wodurch in radialer Richtung eine Kraft auf den Schlauchstutzen 2 wirkt und diesen verformen kann.

Am Schlauchstutzen 2 ist außenseitig ein Crimpabschnitt 3 ausgebildet. Der Crimpabschnitts 3 weist mehrere zumindest teilweise quer zur Aufsteckrichtung eines Schlauches auf den Schlauchstutzen 2 ausgerichtete Rippen auf, die den Schlauch zugfest und/oder verdrehfest fixieren. Die Rippen des Crimpabschnitts weisen zudem je wenigstens eine Richtungsänderung, vorzugsweise mindestens zwei Richtungsänderungen auf.

Im Bereich des Crimpabschnitts 3 weist der Schlauchstutzen 2 innenseitig, also insbesondere eine in einem Durchflusskanal 11 des Schlauchstutzens 2 angeordnete Verstärkung 4 auf. Somit ist eine Stabilisierung des Schlauchstutzens 2 erreicht, so dass eine erhöhte Knicksteifigkeit und/oder verringerte Einschnürung (Verengung) eines Durchflusskanals 11 erreicht ist.

Durch die Verstärkung 4 kann die Wandung des Schlauchstutzens 2 stabilisiert und verstärkt werden, so dass der Schlauchstutzen 2 insgesamt stabiler und verwindungssteifer ausgebildet ist.

Die Verstärkung 4 kann sich, wie in den Figuren 3, 12, 15 und 18 gezeigt ist, innenseitig über die gesamte Länge des außenseitig ausgebildeten Crimpabschnitts 3 erstrecken. Es ist jedoch auch möglich, dass sich die Verstärkung nur über einen Teilabschnitt des Crimpabschnitts 3 erstreckt, da auch bereits dadurch eine verbesserte Belastbarkeit erreicht werden kann.

Die Verstärkung 4 kann zum Beispiel durch wenigstens eine Rippe 8 und/oder eine Wandverdickung der Wand des Schlauchstutzens 2 ausgebildet sein.

Die Verstärkung 4 ragt von einer Grundform 5 des Schlauchnippels 1 jeweils nach innen ab. Die Verstärkung greift dabei an wenigstens zwei in Umfangsrichtung voneinander beabstandeten Stellen an der Grundform 5 an und/oder ist komplett auslaufend ausgebildet.

Bei den nachfolgend noch im Detail beschriebenen Ausführungsvarianten ist die Verstärkung 4 an einer Innenwandung 10 eines Durchflusskanals 11 angesetzt und/oder erstreckt sich an der Innenseite über die gesamte Länge des Crimpabschnitts 3 an der Außenseite. Es kann jedoch auch vorgesehen sein, dass sich die Verstärkung 4 längs einer wenigstens halb so langen Länge wie der Länge des Crimpabschnitts 3 erstreckt.

Die Verstärkung 4 kann einen lichten Öffnungsquerschnitt 6 des Durchflusskanals 11 in wenigstens zwei Teilquerschnitte (Teilkanäle) unterteilen. Nachfolgend sind dazu einige Ausführungsvarianten genauer beschrieben.

Es ist möglich, dass die Verstärkung 4 so ausgebildet ist, dass sie über ihre Quererstreckung einen gleichbleibenden Querschnitt aufweist.

Weiter ist es möglich, dass die Verstärkung 4 entlang ihrer Längserstreckung 9 von einer Längsachse des Schlauchstutzens 2 insbesondere aufgrund wenigstens einer Krümmung, abweicht.

Besonders vorteilhaft kann es sein, wenn der Schlauchnippel 1 durch ein Spritzgussverfahren oder 3D-Druck-Verfahren hergestellt ist. Weiter kann es vorteilhaft sein, wenn die Grundform 5 des Schlauchnippels 1 und die Verstärkung 4 aus dem gleichen Material, insbesondere ausschließlich aus dem gleichen Material, hergestellt sind.

Nachfolgend sind zudem einige Beispiele beschrieben, bei welchen die Verstärkung 4 durch mehrere, insbesondere gleich ausgebildete Rippen 8 ausgebildet ist. Die Rippen 8 können dabei mit gleichbleibender und/oder variierender Stärke ausgebildet sein.

In den Fig. 1-3 ist eine erste Ausführungsvariante gezeigt, bei welcher die Verstärkung 4 durch mehrere (hier, insbesondere vier) von einer Innenwandung 10 einer Grundform 5 des Schlauchnippels 1 abragende Rippen 8 ausgebildet sind. Bei dieser Ausführungsvariante erstrecken sich die Rippen 8 jeweils bis zu einem zentralen Berührungspunkt, in welchem sich alle vier Rippen 8 kontaktieren. Dadurch ist der Durchflusskanal 11 in mehrere Teilkanäle unterteilt (siehe Fig. 2). Im Querschnitt des Schlauchstutzens 2 bilden die Rippen 8 daher ein Kreuz aus, wobei der lichte Querschnitt 6 des Schlauchstutzens 2 durch vier Teilquerschnitte ausgebildet ist.

Die Rippen 8 verlaufen hier vorzugsweise geradlinig von einem Ende zum anderen Ende des Schlauchstutzes 2.

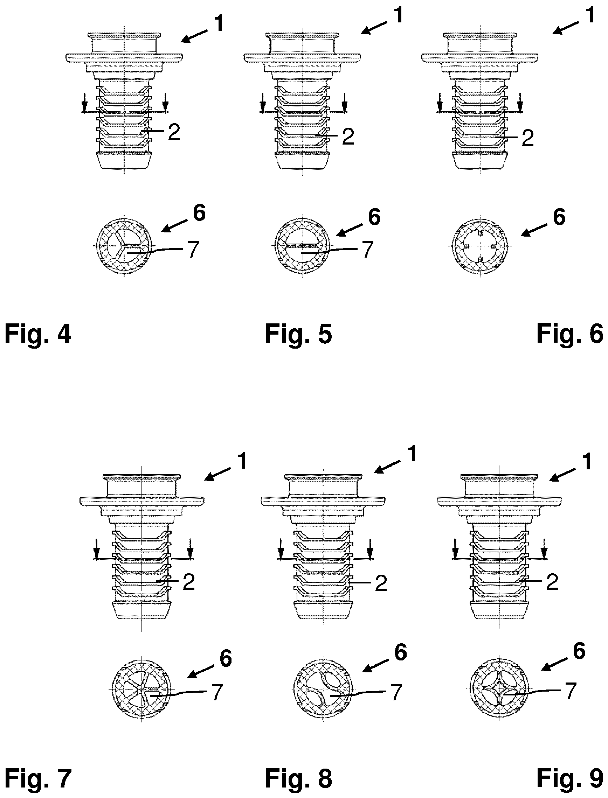

In den Figuren 4-9 sind weitere mögliche Ausgestaltungen von unterschiedlichen Rippenanordnungen der Rippen 8 innerhalb des Durchflusskanals 11 gezeigt.

Fig. 4 zeigt eine Ausführungsvariante, bei welcher drei Rippen 8 von der Innenwandung 10 des Durchflusskanals 11 abragen und sich zentral kontaktieren. Die Rippen 8 bilden daher drei gleich große lichte Teilquerschnitte aus.

Fig. 5 zeigt eine Ausführungsvariante mit zwei sich zentral kontaktierenden Rippen 8, die den Durchflusskanal 11 des Schlauchstutzens 2 in zwei Hälften unterteilen.

Fig. 6 zeigt eine Ausführungsvariante mit vier kurzen Rippen 8, die sich in radialer Richtung nicht soweit erstrecken, dass sie einander berühren, sondern voneinander beabstandet angeordnet sind.

Fig. 7 zeigt eine Ausführungsvariante mit fünf Rippen, die in gleichen Abständen zueinander in Umlaufrichtung angeordnet sind und den Durchflusskanal 11 in fünf Teilkanäle unterteilen.

Fig. 8 zeigt eine Ausführungsvariante, die zwei sich gegenüberliegend angeordnete Rippen 8 aufweist, die einen bogenförmigen Querschnitt aufweisen.

Fig. 9 zeigt eine weitere Ausführungsvariante mit im Querschnitt bogenförmig ausgebildeten Rippen 8, wobei neben den zwischen der Innenwandung 10 und den Rippen 8 ausgebildeten Teilkanälen auch ein Zentralkanal ausgebildet ist.

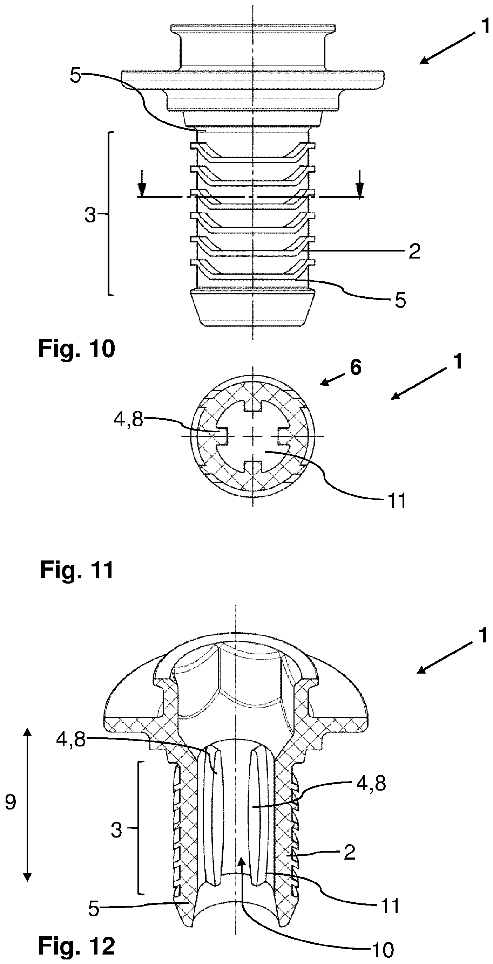

In den Fig. 10-12 ist eine weitere Ausführungsvariante gezeigt, die der Ausführungsvariante aus Fig. 6 ähnelt. Die Stärke der Rippen 8 ist dabei jedoch variierend ausgestaltet, so dass die Dicke der Verstärkung an den Enden dünner als zur Mitte hin ausgebildet ist. Im Längsschnitt der Rippen 8 zeigt sich daher eine bauchige und/oder gebogene Form.

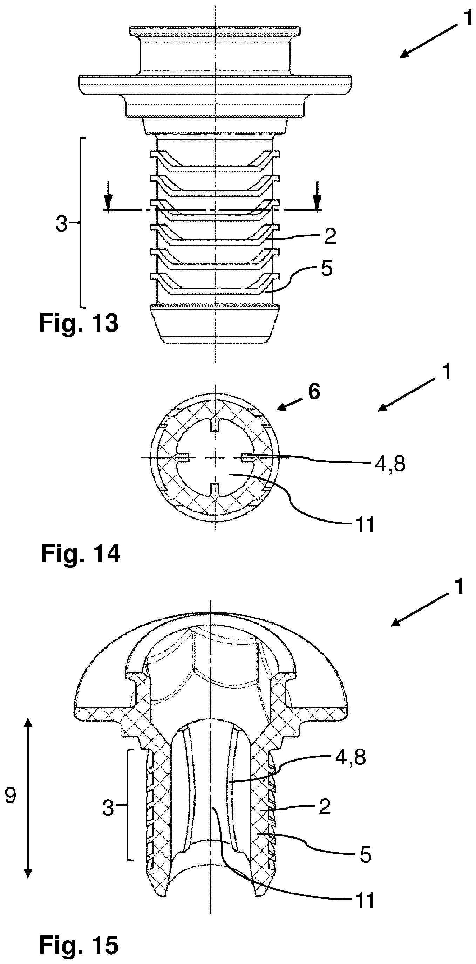

In den Fig. 13-15 ist eine weitere Ausführungsvariante gezeigt, die vier geschwungene Rippen 8 aufweist.

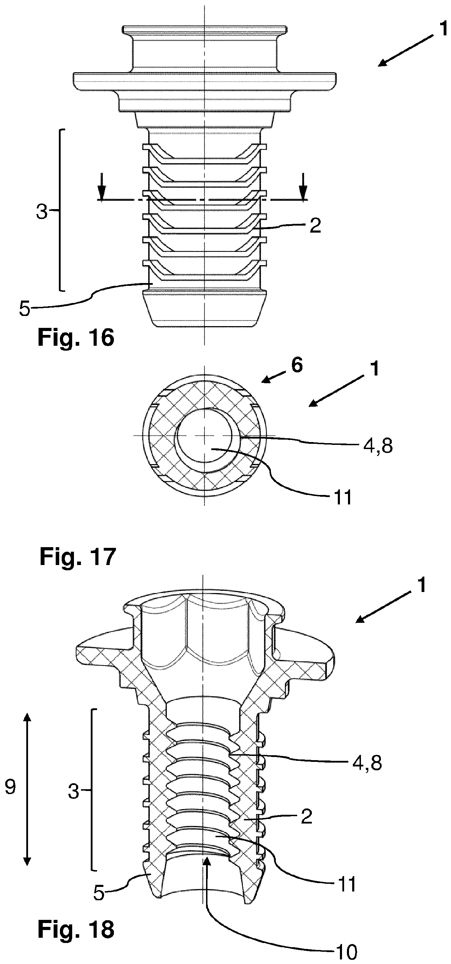

In den Fig. 16-18 ist eine weitere Ausführungsvariante gezeigt, die mehrere innenumfangsseitig umlaufende Rippen 8 aufweist, die in Längsrichtung des Schlauchstutzens 2 hintereinander angeordnet sind, so dass sich ein im Längsschnitt welliges und/oder gezacktes Profil ergibt.

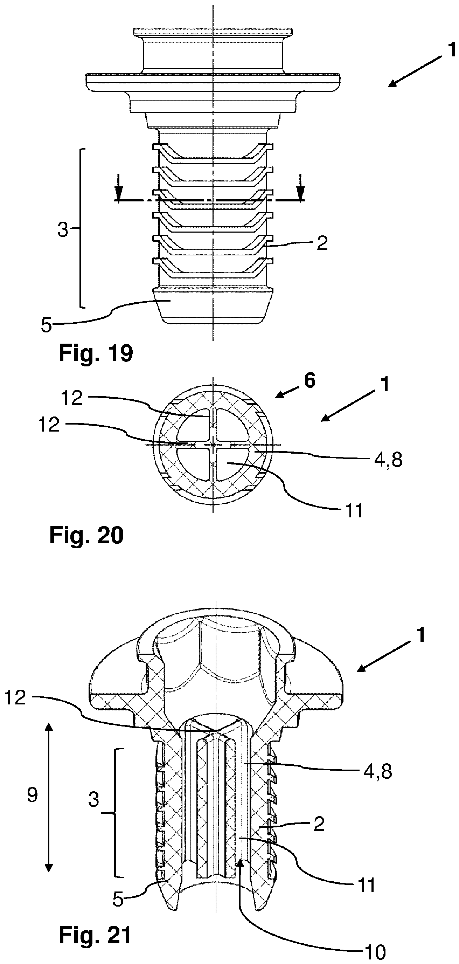

In den Fig. 19-21 ist eine weitere Ausführungsvariante gezeigt, die im Wesentlichen der kreuzverstärkten Ausführungsvariante aus den Fig. 1-3 entspricht. Als zusätzliches Merkmal weist die Ausführungsvariante des Schlauchnippels 1 aus den Fig. 19-21 am oberen und/oder zuströmseitigen Rand eine Abrundung 12 auf. Die Abrundung 12 kann dabei beispielsweise durch eine Verdickung und/oder Verrundung der durch die Rippen 8 gebildeten Stege ausgebildet sein. Durch die Abrundung 12 ist der Durchfluss verbessert, da zuströmseitig kein spitzkantiger Rand der Rippen 8 vorliegt und somit der Strömungswiderstand verringert ist. Somit können auch Turbulenzen beim Durchfluss einer Flüssigkeit besser verhindert werden. Insbesondere weist diese Ausführungsform des Schlauchnippels 1 keine senkrecht zur Strömungsrichtung und/oder zur Längsachse ausgerichtete Prallfläche auf.

Die Erfindung betrifft also insbesondere einen Schlauchnippel 1 mit einem Schlauchstutzen 2, wobei der Schlauchstutzen 2 außenseitig einen Crimpabschnitt 3 zur Befestigung einer Fluidleitung aufweist, wobei der Schlauchstutzen 2 in seinem Inneren wenigstens eine Verstärkung 4 aufweist, die die Wandung des Schlauchstutzens 2 stabilisiert.

### Bezugszeichenliste

- 1: Schlauchnippel
- 2: Schlauchstutzen
- 3: Crimpabschnitt
- 4: Verstärkung
- 5: Grundform
- 6: Querschnitt
- 7: Teilquerschnitt
- 8: Rippe
- 9: Längserstreckung
- 10: Innenwandung
- 11: Durchflusskanal
- 12: Abrundung

## Patentansprüche

1. Schlauchnippel (1) mit einem Schlauchstutzen (2), wobei der Schlauchstutzen (2) außenseitig einen Crimpabschnitt (3) aufweist, **dadurch gekennzeichnet, dass** der Schlauchstutzen (2) in seinem Inneren im Bereich des Crimpabschnitts (3) wenigstens eine Verstärkung (4) aufweist.

2. Schlauchnippel (1) nach Anspruch 1, **dadurch gekennzeichnet, dass** sich die Verstärkung (4) längs wenigstens einer Hälfte des Crimpabschnitts (3) erstreckt.

3. Schlauchnippel (1) nach Anspruch 1 oder 2, **dadurch gekennzeichnet, dass** sich die Verstärkung (4) zumindest teilweise innenumfangseitig und/oder umlaufend erstreckt.

4. Schlauchnippel (1) nach einem der vorangehenden Ansprüche, **dadurch gekennzeichnet, dass** die Verstärkung (4) von einer Grundform (5) des Schlauchnippels (1) nach innen abragend ausgebildet ist.

5. Schlauchnippel (1) nach einem der vorangehenden Ansprüche, **dadurch gekennzeichnet, dass** die Verstärkung (4) einen lichten Querschnitt (6) des Schlauchstutzens (1) in wenigstens zwei, vorzugsweise wenigstens drei Teilquerschnitte (7) unterteilt.

6. Schlauchnippel (1) nach einem der vorangehenden Ansprüche, **dadurch gekennzeichnet, dass** die Verstärkung (4) an wenigstens zwei, vorzugsweise wenigstens drei, voneinander in Umfangsrichtung beabstandeten Stellen der oder einer Grundform (5) des Schlauchnippels (1) angreift.

7. Schlauchnippel (1) nach einem der vorangehenden Ansprüche, **dadurch gekennzeichnet, dass** die Verstärkung (4) wenigstens zwei, vorzugsweise wenigstens drei, Rippen (8) aufweist, vorzugsweise die an ihren abragenden Enden miteinander verbunden sind.

8. Schlauchnippel (1) nach einem der vorangehenden Ansprüche, **dadurch gekennzeichnet, dass** die Verstärkung (4) spritzgussentformbar ausgebildet ist und/oder über ihre Längserstreckung (9) einen gleichbleibenden Querschnitt aufweist.

9. Schlauchnippel (1) nach einem der vorangehenden Ansprüche, **dadurch gekennzeichnet, dass** die Verstärkung (4) über ihre Quererstreckung einen gleichbleibenden Querschnitt aufweist.

10. Schlauchnippel (1) nach einem der vorangehenden Ansprüche, **dadurch gekennzeichnet, dass** die Verstärkung (4) entlang ihrer Längserstreckung (9) von einer Längsachse des Schlauchstutzens (2) insbesondere aufgrund wenigstens einer Krümmung, abweicht.

11. Schlauchnippel (1) nach einem der vorangehenden Ansprüche, **dadurch gekennzeichnet, dass** die Verstärkung (4) durch wenigstens eine Rippe (8) mit gleichbleibender und/oder variierender Stärke ausgebildet ist.

12. Schlauchnippel (1) nach einem der vorangehenden Ansprüche, **dadurch gekennzeichnet, dass** die Verstärkung (4) durch wenigstens eine Rippe (8) ausgebildet ist, die von einer Innenwandung (10) nach innen absteht, insbesondere senkrecht absteht.

13. Schlauchnippel (1) nach einem der vorangehenden Ansprüche, **dadurch gekennzeichnet, dass** die Verstärkung (4) am oberen Rand und/oder zuströmseitig eine Abrundung (12) aufweist.

14. Verwendung eines Schlauchnippels (1) nach einem der vorangehenden Ansprüche zur Ausbildung einer Schlauchverbindung und/oder einer Rohrverbindung.
